# EUROPÄISCHE PATENTSCHRIFT

(11) **EP 2 805 600 B1**
(45) Veröffentlichungstag und Bekanntmachung des Hinweises auf die Patenterteilung: **14.02.2018**
(21) Anmeldenummer: 14177260.8
(22) Anmeldetag: 21.12.2012
(51) Int. Cl.: A01D 65/02

(54) **Heber für Erntegut**
Lifter for crops
Levier pour récolte

(30) Priorität: 13.01.2012 DE 102012100302
(43) Veröffentlichungstag der Anmeldung: 26.11.2014
(62) Teilanmeldung aus: 12199207.7
(73) Patentinhaber: Gebr. Schumacher Gerätebaugesellschaft mbH, 57612 Eichelhardt (DE)
(72) Erfinder: Höller, Frank, 57629 Stein Wingert (DE); Schumacher, Friedrich-Wilhelm, 57612 Birnbach (DE)
(74) Vertreter: Neumann Müller Oberwalleney & Partner Patentanwälte

(56) Entgegenhaltungen:
- WO-A1-2006/072158
- DE-C- 864 637
- US-A- 2 734 332

## Beschreibung

Die Erfindung betrifft einen Heber für Erntegut für ein Mähwerk einer Erntemaschine, umfassend eine an dem Mähwerk befestigbare Tragschiene, wobei die Tragschiene einen Profilträger aufweist und wobei ein Heberprofil zur lösbaren Befestigung an dem Profilträger durch eine Klemmbackenanordnung vorgesehen ist.

Aus dem Stand der Technik ist ein sogenannter Ährenheber bekannt, welcher mit dem vorderen Teil der Tragschiene, an dem ein Halmheber befestigt ist, über den Boden gleitet oder sich knapp über dem Boden bewegt und mit dem Halmheber am Boden liegende Halme des Ernteguts aufnimmt, so dass diese durch das Messerwerk des Mähwerks abgeschnitten werden können und somit die Ähren beispielsweise einem Dreschwerk zugeführt werden können. Einen derartigen Ährenheber zeigt die DE 23 25 916 A, bei dem der Halmheber durchgängig aus einem U-förmigen Profilteil besteht, dessen Schenkel sich ausgehend von der Verschweißung des Halmhebers an der Tragschiene zum freien Ende des Halmhebers zunehmend verkürzen.

Bei Erntegut, welches die Früchte nicht an der Spitze von vergleichsweise langen Halmen trägt, wie dies bei Getreide der Fall ist, sondern an Sträuchern wächst, wie beispielsweise Hülsenfrüchte, sind die Früchte oder Schoten in dem gesamten Strauch verteilt, auch in dem bodennahen Bereich des Strauchs. Daraus ergibt sich die Forderung, derartiges Erntegut besonders knapp über dem Boden zu schneiden und durch spezielle Heber derart anzuheben, dass möglichst keine Früchte durch das Mähwerk zerstört werden. Dazu werden beispielsweise die zuvor beschriebenen Ährenheber mit der Abwandlung verwendet, dass die führende Spitze des Halmhebers so weit herabragt, dass diese idealer weise unmittelbar an der Ackeroberfläche geführt wird. Durch Steine im Boden werden die Ährenheber dabei jedoch häufig beschädigt und müssen aufwendig ausgetauscht bzw. instandgesetzt werden. Die WO 2006/072158 A1 betrifft einen Ährenheber, wobei vorgeschlagen wird, ein Heberprofil lösbar an einer tragenden Struktur anzuordnen, so dass das Heberprofil einzeln austauschbar ist und ein Austausch des gesamten Ährenhebers vermieden wird. Ein Nachteil besteht darin, dass ein Austausch der tragenden Struktur, falls dieser dennoch erforderlich wird, aufwändig ist und dass die Häufigkeit der Ausfälle der Heberprofile an sich nicht verringert wird.

Die DE 864 637 offenbart einen vor dem Schneidwerk einer Mähmaschine angeordneten Ährenheber, bei welchem die vorn in eine gerade Spitze auslaufende Halmhebestange mittels einer einteiligen Schelle am vorderen Ende der Tragestange in einem spitzen Winkel zu derselben und gegen das Schneidwerk hin ansteigend so festgestellt werden kann, dass ihre Spitze etwas in die Erdbodenoberfläche eindringt oder diese gerade berührt. Ein weiteres Eindringen in das Erdreich wird durch einen mit Abstand hinter dem vorderen Ende der Hebestange angeordneten Gleitschuh verhindert.

Eine Aufgabe der Erfindung besteht darin, einen Heber für Erntegut zur Verfügung zu stellen, welcher weniger störungsanfällig und/oder mit geringerem Aufwand instand setzbar ist.

Die Aufgabe wird gelöst durch einen Heber für Erntegut gemäß Patentanspruch 1. In den Unteransprüchen sind bevorzugte Ausführungsformen und vorteilhafte Weiterbildungen angegeben.

Mit der Bezeichnung als Heber für Erntegut soll zum Ausdruck gebracht werden, dass keine Einschränkung auf ein spezielles Erntegut, wie Getreideähren oder Hülsenfrüchte vorgenommen wird. Die erfindungsgemäßen Heber für Erntegut sind als Heber für beliebiges Erntegut geeignet. Auf Besonderheiten in der Verarbeitung von speziellem Erntegut wird gegebenenfalls im Einzelnen eingegangen.

Der erfindungsgemäße Heber für Erntegut für ein Mähwerk einer Erntemaschine umfasst eine an dem Mähwerk befestigbare Tragschiene mit einen Profilträger für ein Heberprofil, in der Regel an einem in einer Arbeitsrichtung vorderen Ende der Tragschiene. Die Arbeitsrichtung entspricht in der Regel der Fahrtrichtung der Erntemaschine. Das Heberprofil ist vorzugsweise zur lösbaren Befestigung an dem Profilträger vorgesehen. Ein Vorteil dieses Hebers für Erntegut besteht darin, dass das Heberprofil einzeln von dem Profilträger lösbar und austauschbar ist. Bei einer Beschädigung kann dieser Austausch schnell und einfach durchgeführt werden. Die Ersatzteile in Form der einzelnen Profilträger sind wesentlich kleiner, leichter und kostengünstiger als vollständige, einteilige Ährenheber.

Gegenstand der Erfindung ist ein Heber für Erntegut für ein Mähwerk einer Erntemaschine, umfassend eine an dem Mähwerk befestigbare Tragschiene, wobei die Tragschiene einen Profilträger aufweist und wobei ein Heberprofil zur lösbaren Befestigung an dem Profilträger durch eine Klemmbackenanordnung mit zwei Klemmbacken vorgesehen ist.

Erfindungsgemäß ist eine der zwei Klemmbacken lösbar, während die andere der zwei Klemmbacken an dem Profilträger festgelegt bleibt. Dadurch lässt sich besonders vorteilhaft ein defektes Heberprofil auswechseln oder in Längsrichtung L verstellen, ohne dass der eingestellte Winkel für das Heberprofil verloren geht. Da die zweite Klemmbacke an dem Profilträger befestigt bleibt, kann die gelöste Klemmbacke einfach auf dieselbe Winkelposition eingestellt werden, wie die feste Klemmbacke und das neue Heberprofil ist exakt ausgerichtet. Angesichts der nicht unerheblichen Anzahl von Wechseln defekter Heberprofile pro Erntesaison stellt der Entfall der Ausrichtung des Winkels eine Arbeitserleichterung und Zeitersparnis dar.

Gemäß einer bevorzugten Ausführungsform ist vorgesehen, dass die Klemmbacken jeweils mit einem separaten Befestigungsmittel an dem Profilträger befestigt sind. Somit ist es gleichgültig, welche Klemmbacke gelöst wird. Die jeweils andere bleibt fest verbunden mit dem Profilträger. Insbesondere weisen die Klemmbacken jeweils eine erste Ausnehmung zur befestigenden Aufnahme eines Schraubbolzens und eine zweite Ausnehmung als Zugang zu einem Schraubbolzen der jeweils anderen Klemmbacke auf. Die zweite Ausnehmung ermöglicht vorteilhaft, den Schraubbolzen der jeweils anderen Klemmbacke mit einem Gegenelement, also beispielsweise einer Schraubmutter an dem Profilträger zu sichern. Das bedeutet, die ersten Aufnahmen weisen jeweils eine kleinere Bohrung auf, als die zweiten Aufnahmen, so dass eine Befestigung nur mit den ersten Aufnahmen möglich ist. Die ersten Aufnahmen können vorzugsweise eine Ausformung entsprechend der Kopfform des Schraubbolzenkopfs entsprechen, um das Anziehen der Schraubmutter zu erleichtern.

Bevorzugte Ausführungsbeispiele werden nachfolgend mit Bezugnahme auf die Zeichnungen dargestellt.

Hierin zeigen:
Figur 1 eine perspektivische Ansicht eines nicht erfindungsgemäßen Hebers zur Erläuterung;
Figur 2 eine Seitenansicht eines einteiligen Hebers für Erntegut nach dem Stand der Technik, festgelegt an einem Mähmesserbalken und Mähfinger einer Erntemaschine, zur Erläuterung;
Figur 3 eine Seitenansicht einer Ausführungsform eines erfindungsgemäßen Hebers für Erntegut;
Figur 3A einen Schnitt längs der Linie A-A in der Figur 3;
Figuren 4 bis 7 verschiedene Ansichten einer Klemmbacke einer Ausführungsform des Hebers gemäß der Figur 3;
Figuren 8 und 9 den erfindungsgemäßen Heber gemäß Figur 3 in zwei perspektivischen Ansichten.

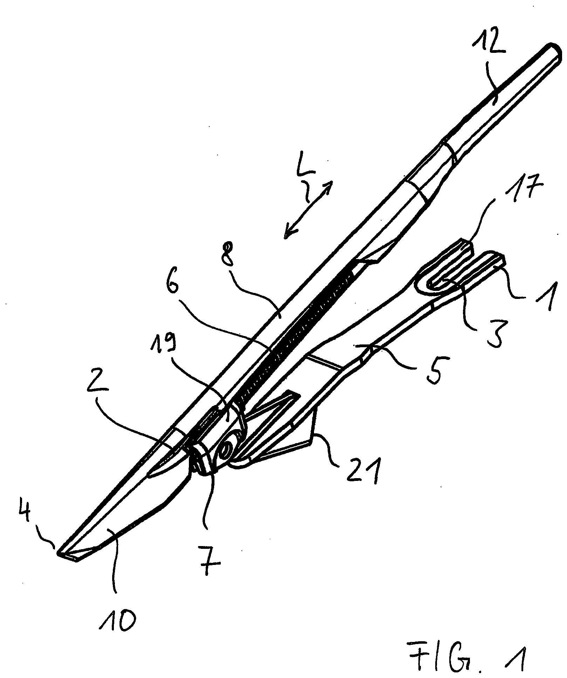

In der Figur 1 ist zur Erläuterung ein nicht erfindungsgemäßer Heber für Erntegut perspektivisch dargestellt. Der Heber umfasst eine Tragschiene 5, welche zur Befestigung des Hebers an einem Mähwerk einer Erntemaschine vorgesehen ist. Dazu weist die Tragschiene 5 an ihrem hinteren Ende 1 eine Ausnehmung 3 auf, welche als ein zu dem hinteren Ende 1 hin geöffnetes Langloch ausgeführt ist. Die Ausnehmung 3 lässt sich auf einen Bolzen mit Gewinde an dem Mähwerk aufschieben und mit einer Gewindemutter sichern (nicht dargestellt). Gleichzeitig wird eine Aufnahme 21 an der Tragschiene 5 auf einen Mähfinger (nicht dargestellt) des Mähwerks aufgeschoben. Ein Vorteil der Ausführung mit dem Langloch 3 besteht darin, dass eine Montage der Tragschiene an unterschiedlichen Fingertypen möglich ist, auch wenn die Mähfinger verschiedene Längen und Dicken aufweisen. Auf eine Anschraubfläche 17, welche die Ausnehmung 3 umgibt, wird nicht näher eingegangen, da diese nicht Gegenstand dieser Erfindung ist.

An ihrem vorderen Ende weist die Tragschiene 5 einen Profilträger 7 auf, an dem ein Heberprofil 8 zur lösbaren Befestigung vorgesehen ist. Das Heberprofil 8 ist bevorzugt in einer Mehrzahl von in Längsrichtung L des Heberprofils 8 beabstandeten Positionen mit dem Profilträger 7 verbindbar. Dazu weist der Profilträger 7 im dargestellten Ausführungsbeispiel zwei gegeneinander verspannbare Klemmbacken 19 auf, welche auf einen Verbindungsbereich 6 des Heberprofils 8 einwirken. Das Heberprofil 8 an sich ist ein in der durch den Doppelpfeil L gekennzeichneten Längsrichtung langgestrecktes, in etwa stabförmiges Bauteil mit einem Kopfbereich 10 an seinem führenden Ende 4, welcher dazu vorgesehen ist, möglichst knapp über dem Boden geführt zu werden. Der Kopfbereich 10 kann beispielsweise in etwa pfeilartig geformt sein, von der Spitze am führenden Ende 4 aus nach hinten breiter werdend, während ein mittlerer Abschnitt des Heberprofils 8 mit dem Verbindungsbereich 6 einen im wesentlichen gleichbleibenden Querschnitt aufweist und ein Ende 12 des Heberprofils 8 nach hinten leicht schmaler werdend zusammenläuft. Auf die Ausgestaltung des Verbindungsbereichs 6 und eines Durchbruchs 2 des Heberprofils 8 wird nicht eingegangen, da diese nicht Gegenstand dieser Erfindung sind.

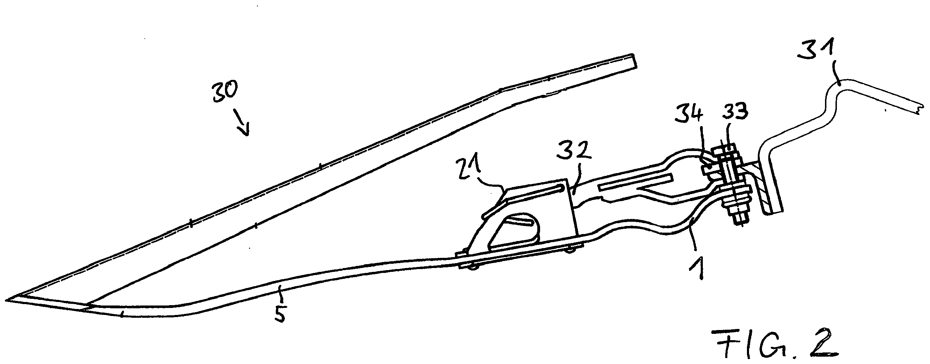

In der Figur 2 ist der Mähbalken 31 in schematischer Darstellung erkennbar, von dem ein Mähfinger 32 vorstehend dargestellt ist. Dieser ist über eine Schraube 33 am Mähbalken 31 festgelegt. Es sind in die Zeichenebene hinein, bzw. aus dieser heraus, mehrere weitere Mähfinger 32 dem Mähbalken 31 mit Abstand zueinander zugeordnet. Die Mähfinger 32 dienen zur Führung eines Messerbalkens 34, der Mähklingen zum Abtrennen des Erntegutes aufweist. Der dargestellte Heber 30 für Erntegut entspricht dem Stand der Technik und dient lediglich der Erläuterung. Die Befestigung eines erfindungsgemäßen Hebers für Erntegut erfolgt an einem ebensolchen Mähwerk. Das hintere Ende 1 der Tragschiene 5 ist beispielsweise über eine Schraube 33 am Mähbalken 31 festlegbar. Die Tragschiene 5 ist bevorzugt aus einem Flachmaterial hergestellt und weist biegeelastische Eigenschaften auf. Die Tragschiene 5 ist über Befestigungsmittel in Form der Aufnahme 21 am Mähfinger 32 abgestützt. Die Aufnahme 21 ist mit der Tragschiene 5 beispielsweise durch Nieten verbunden.

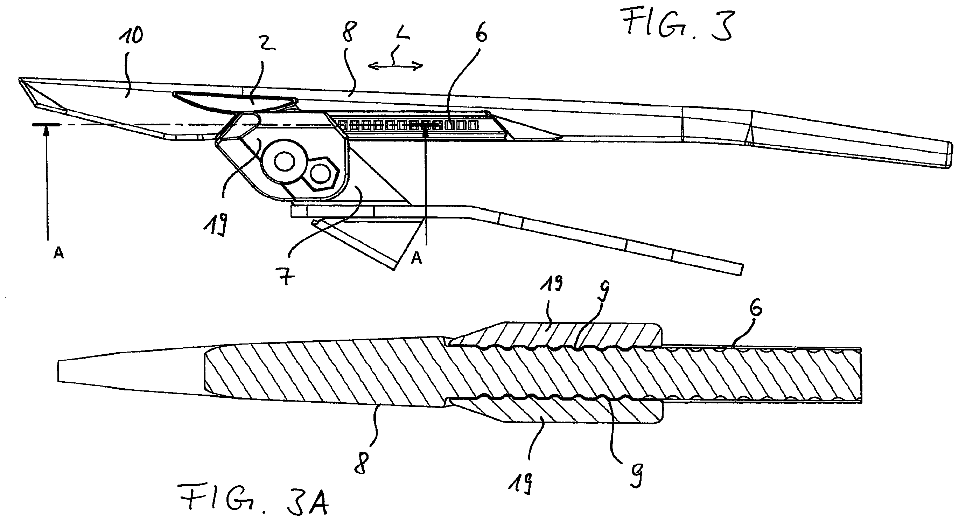

In der Figur 3 ist eine Ausführungsform des erfindungsgemäßen Hebers für Erntegut dargestellt. Zur Anpassung an verschiedene Arten von Erntegut kann der Profilträger 7 über eine Drehachse drehbeweglich verstellbar sein. Bevorzugt ist vorgesehen, dass das Heberprofil 8 in einer Mehrzahl von in seiner Längsrichtung L beabstandeten Positionen mit dem Profilträger 7 verbindbar ist. Dazu wirkt der Profilträger 7 mit dem Verbindungsbereich 6 zusammen, welcher auch den maximalen Verstellbereich angibt. Gemäß einer bevorzugten Ausführungsform ist das Heberprofil 8 formschlüssig mit dem Profilträger 7 verbindbar. Dazu weist der Verbindungsbereich 6 eine Ausformung auf, die eine komplementäre Entsprechung an dem Profilträger 7 findet, so dass die Ausformungen entsprechend ineinander eingreifen können und so eine in Längsrichtung L formschlüssige Verbindung bilden. Als Ausformung wird in der Regel eine Verzahnung gewählt. Durch die formschlüssige Verbindung wird vorteilhaft schon bei geringen Anzugskräften am Profilträger 7 eine stabile Verbindung zwischen dem Profilträger 7 und dem Heberprofil 8 erzeugt.

Im Zusammenhang mit der Figur 3A wird nachfolgend die formschlüssige Verbindung zwischen dem Heberprofil 8 und dem Profilhalter 7 näher erläutert. Die Figur 3A zeigt einen Schnitt entlang der Linie A-A in Figur 3, in vergrößerter Darstellung. Der Schnitt zeigt das Heberprofil 8, wobei das Heberprofil 8 von zwei gegeneinander wirkenden Klemmbacken 19 einer Klemmbackenanordnung eingespannt ist. Die Klemmbacken 19 weisen auf ihrer dem Verbindungsbereich 6 des Heberprofils 8 zugewandten Seite eine Verzahnung 9 auf, welche mit einer entsprechenden Gegenverzahnung des Verbindungsbereichs 6 zusammenwirkt. Durch die Verzahnung 9 ist in Längsrichtung L eine überwiegend auf Formschluss der Bauteile beruhende Verbindung gegeben. Die Verzahnung 9 direkt an der Klemmbacke 19 vorzusehen, hat den Vorteil, dass auf den Einsatz leicht verlierbarer Einzelteile verzichtet werden kann.

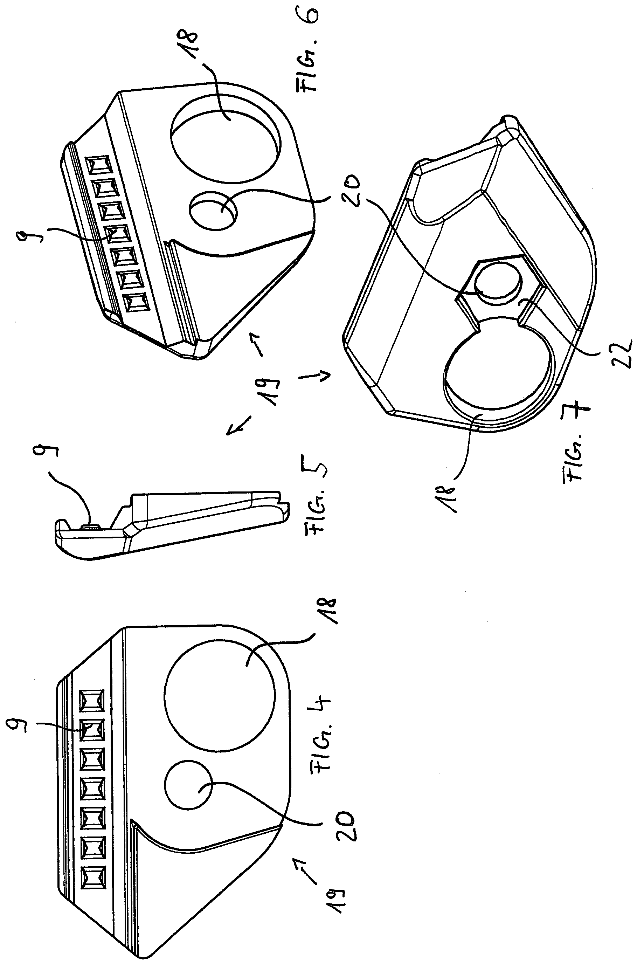

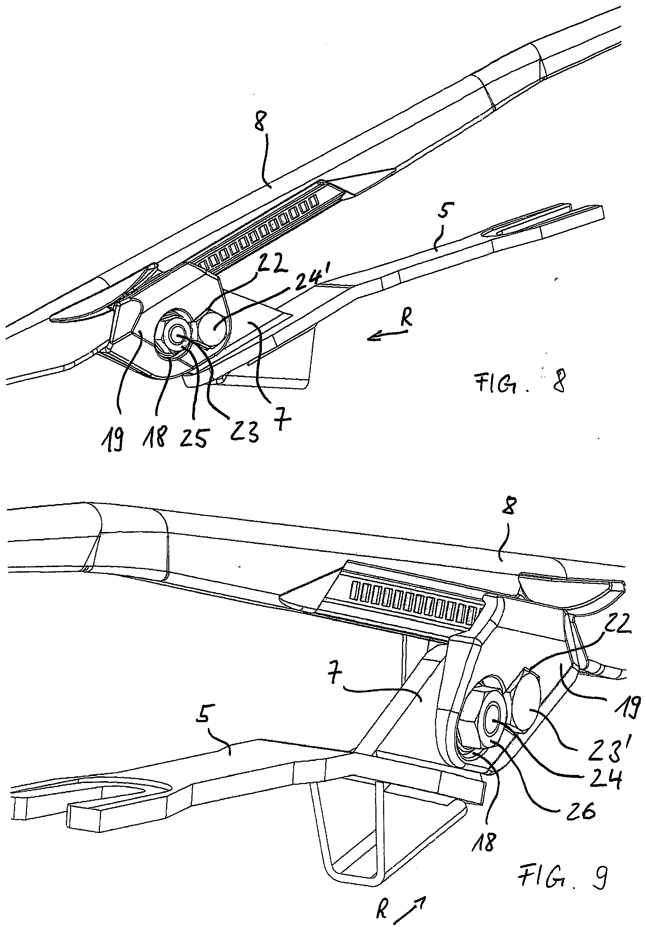

In den Figuren 4 bis 7 ist die Klemmbacke 19 des erfindungsgemäßen Hebers gemäß Figur 3 in vier verschiedenen Ansichten dargestellt, die hier gemeinsam beschrieben werden. Die Verzahnung 9 weist eine Reihe von Zähnen innen an einer halbschalenförmigen Aufnahme für den Verbindungsbereich des Heberprofils 8 (nicht dargestellt) auf. Die Ausnehmungen 18 und 20 der Klemmbacken 19 unterscheiden diese Ausführungsform von den in Figur 1 gezeigten Klemmbacken 19. Die in den Figuren 4 bis 7 dargestellte Klemmbacke 19 ist als in Arbeitsrichtung R gesehen rechte Klemmbacke vorgesehen, die an dem Profilträger 7 mittels eines Schraubbolzens 23 und einer Schraubmutter 25 (siehe Figuren 20 und 21) mit der ersten Ausnehmung 20 zu befestigen ist. Eine Verschraubung der zwei Klemmbacken 19 gegeneinander erfolgt nicht. Vielmehr ermöglicht die zweite Ausnehmung 18 der Klemmbacke 19 den ungehinderten Zugang zu der Verschraubung der jeweils anderen Klemmbacke, wie nachfolgend im Zusammenhang mit den Figuren 8 und 9 näher erläutert wird. Die Ausformung 22 um die erste Ausnehmung 20 herum dient einer in Drehrichtung formschlüssigen Aufnahme eines Schraubenkopfs 23', der in der Regel vier- oder sechskantförmig ausgeführt ist, um das Anziehen und Lösen einer Gegenmutter 25 zu vereinfachen.

Die Figuren 8 und 9 zeigen den erfindungsgemäßen Heber gemäß Figur 3 in zwei perspektivischen Ansichten. In der Figur 8 ist die in Arbeitsrichtung R linke Seite, in der Figur 9 die in Arbeitsrichtung R rechte Seite sichtbar. Die in der Figur 8 erkennbare linke Klemmbacke 19 weist ebenfalls die zweite Ausnehmung mit größerem Durchmesser als die erste Ausnehmung 20 auf. Innerhalb der zweiten Ausnehmung 18 ist der die rechte Klemmbacke 19 befestigende Schraubbolzen 23 erkennbar, der mit der Schraubmutter 25 gesichert wird. Ein Lösen der Schraubmutter 25 und somit ein Lösen der rechten Klemmbacke 19 ist möglich, ohne die linke Klemmbacke 19 zu lösen. Diese hält vielmehr den voreingestellten Winkel des Heberprofils 8 fest, indem die relative Position der linken Klemmbacke 19 zu dem Profilträger 7 unverändert bleibt, während das Profil 8 ausgetauscht wird, beispielsweise auf Grund eines Defekts. Die linke Klemmbacke 19 ist ebenfalls mittels eines Schraubbolzens 24 durch die erste Ausnehmung 20 an dem Profilträger befestigt, wobei in der Figur 8 lediglich der Schraubbolzenkopf 24' sichtbar ist, der formschlüssig in der sechskantförmigen Ausformung 22 der Klemmbacke 19 aufgenommen ist. In der Figur 9 ist erkennbar, dass der Schraubbolzen 24 durch eine Schraubmutter 26 gesichert ist. Die zweite Ausnehmung 18 der rechten Klemmbacke 19 erlaubt erkennbar auch ein Lösen der linken Klemmbacke 19, während die rechte Klemmbacke am Profilträger 7 befestigt bleibt. Auch der Schraubbolzenkopf 23' ist in der sechseckförmigen Ausformung 22 der rechten Klemmbacke 19 formschlüssig aufgenommen, um das Lösen und Anziehen der Schraubmutter 25 zu erleichtern.

### Bezugszeichenliste

- 1: Hinteres Ende
- 2: Durchbruch
- 3: Ausnehmung
- 4: Führendes Ende
- 5: Tragschiene
- 6: Verbindungsbereich
- 7: Profilträger
- 8: Heberprofil
- 9: Verzahnung
- 10: Kopfbereich
- 12: Ende
- 17: Anschraubfläche
- 18: Zweite Ausnehmung der Klemmbacke
- 19: Klemmbacke
- 20: Erste Ausnehmung der Klemmbacke
- 21: Aufnahme
- 22: Ausformung
- 23: Schraubbolzen
- 23': Schraubbolzenkopf
- 24: Schraubbolzen
- 24': Schraubbolzenkopf
- 25: Schraubmutter
- 26: Schraubmutter
- 30: Heber für Erntegut nach dem Stand der Technik
- 31: Mähbalken
- 32: Mähfinger
- 33: Schraube
- 34: Messerbalken
- L: Längsrichtung
- R: Arbeitsrichtung

## Patentansprüche

1. Heber für Erntegut für ein Mähwerk einer Erntemaschine, umfassend eine an dem Mähwerk befestigbare Tragschiene (5), wobei die Tragschiene einen Profilträger (7) aufweist, und wobei ein Heberprofil (8) zur lösbaren Befestigung an dem Profilträger (7) durch eine Klemmbackenanordnung vorgesehen ist,
**dadurch gekennzeichnet,**
**dass** die Klemmbackenanordnung zwei Klemmbacken (19) aufweist, wobei eine der zwei Klemmbacken (19) lösbar ist, während die andere der zwei Klemmbacken (19) an dem Profilträger (7) festgelegt bleibt.

2. Heber nach Anspruch 1, **dadurch gekennzeichnet,**
**dass** die Klemmbacken (19) jeweils mit einem separaten Befestigungsmittel an dem Profilträger befestigt sind.

3. Heber nach einem der Ansprüche 1 oder 2, **dadurch gekennzeichnet,**
**dass** die Klemmbacken (19) jeweils eine erste Ausnehmung (20) zur befestigenden Aufnahme eines Schraubbolzens (23, 24) und eine zweite Ausnehmung (18) als Zugang zu einem Schraubbolzen der jeweils anderen Klemmbacke (19) aufweisen.

## Claims

1. Crop lifter for a mowing device of a harvesting machine, comprising a support bar (5), attachable on the mowing device, wherein the support bar comprises a carrier (7), and wherein a lifter rod (8) is provided to be detachably retained in one of a plurality of positions on the carrier (7) by means of a clamping jaws arrangement
**characterized in**
**that** the clamping jaws arrangement comprises two clamping jaws (19), wherein one of the two clamping jaws (19) is detachable, while the other of the two clamping jaws (19) remains fixed on the carrier (7).

2. Crop lifter according to claim 1, **characterised in**
**that** the clamping jaws (19) are each attached by a separate attachment means on the carrier, respectively.

3. Crop lifter according to one of claims 1 or 2, **characterised in**
**that** the clamping jaws (19) each have, respectively, a first recess (20) for fixingly accommodating a bolt (23, 24) and a second recess (18) as an access to a bolt of the respectively other clamping jaw (19).

## Revendications

1. Levier pour récolte pour une barre de coupe d'une machine de récolte, comprenant un rail porteur (5) pouvant être fixé sur la barre de coupe, dans lequel la barre de coupe présente un support profilé (7), et dans lequel un profilé de levier (8) est prévu sur le support profilé (7) par un agencement de mâchoires de serrage, pour une fixation séparable,
**caractérisé en ce que**
l'agencement de mâchoires de serrage présente deux mâchoires de serrage (19), dans lequel une des deux mâchoires de serrage (19) est séparable tandis que l'autre des deux mâchoires de serrage (19) reste fixée sur le support profilé (7).

2. Levier selon la revendication 1, **caractérisé en ce que** les mâchoires de serrage (19) sont respectivement fixées sur le support profilé par un moyen de fixation séparé.

3. Levier selon la revendication 1 ou 2, **caractérisé en ce que** les mâchoires de serrage (19) présentent respectivement un premier évidement (20) pour la réception par fixation d'un boulon fileté (23, 24) et un second évidement (18) en tant qu'accès à un boulon fileté de l'autre mâchoire de serrage (19) respective.
